# EUROPEAN PATENT APPLICATION

(11) **EP 4 610 874 A1**
(43) Date of publication of application: **03.09.2025**
(21) Application number: 24160619.3
(22) Date of filing: 29.02.2024
(51) Int. Cl.: G06F 30/27, G06F 30/30, G06F 30/13, G06F 111/20, G06F 119/20

(54) **METHOD AND SYSTEM FOR SELECTION OF COMPONENTS IN ELECTRICAL PLANT DESIGN**

(71) Applicant: Siemens Aktiengesellschaft, 80333 München (DE)
(72) Inventor: The designation of the inventor has not yet been filed
(74) Representative: Isarpatent

(57) **Abstract**

Disclosed is a method (100) for selection of components in an electrical plant design. The method comprises identifying dummy request objects within the electrical plant design, representing a placeholder for a component. The method further comprises extracting and normalizing features of the dummy request objects from a component library. The features include a combination of attributes, masks, and properties of the dummy request objects. The method further comprises aggregating the normalized features of each dummy request object. The method further comprises processing the aggregated features of the dummy request objects, by utilizing a pre-trained model using embedding techniques, to calculate similarity scores between the dummy request objects and available component options in the component library. The method further comprises generating an output with a selection of components for each of the dummy request objects based on the similarity scores thereof.

## Description

The present invention relates to electrical plant design, and specifically to a method and a system for optimizing the selection and replacement of components within an electrical plant design using a content-based recommendation system.

In the process of electrical plant design, the industry has long relied on design applications to facilitate the creation and modification of plant schematics. Traditionally, the use of design application involves a basic design phase and a detailed design phase. In the basic design phase, the design applications is, first, utilized for generating initial placeholders or "dummy request objects" that represent components within the electrical plant design, complete with symbols and technical specifications required for various reports and diagrams. Subsequently in the detailed design phase, the designers are tasked with manually searching for and replacing these dummy objects with actual manufacturing devices and their elements.

However, this conventional approach has many challenges. The manual searching and replacement steps involve the tedious manual process of selecting the appropriate manufacturing device from a vast library. This manual intervention not only hampers engineering productivity but also introduces a significant risk of human error, which can lead to functionality and financial losses if errors go undetected before procurement, or even necessitate a complete rework of the documents. In some cases, for the replacement of elements, the software tools may automatically match new elements with the existing ones based on predefined rules, often without providing any feedback to the user. This can lead to incorrect mappings and, consequently, functionality losses that require further rework.

Therefore, the existing solutions, while providing a rudimentary framework for component replacement, are limited by their reliance on manual processes and lack of interactive feedback mechanisms. The absence of a more intuitive, automated approach to component selection and replacement has been a notable gap, leading to inefficiencies and increased potential for errors.

The present invention seeks to address these shortcomings by providing a method that automates the identification and replacement of dummy request objects in electrical plant designs. The present invention implements a content-based recommendation technique to replace the manual process of searching and replacing dummy request objects with manufacturing devices and their elements in the design phase. The recommendation engine analyses properties, masks, and attributes of both dummy objects and manufacturing devices to suggest the best possible choices to the end user. This approach significantly enhances design accuracy and efficiency, mitigating the challenges inherent in manual replacement methods.

The object of the present invention is achieved by a method for selection of components in an electrical plant design. The method comprises identifying dummy request objects within the electrical plant design. Herein, each dummy request object represents a placeholder for a component. The method further comprises extracting and normalizing features of the dummy request objects from a component library associated with the electrical plant design. The features include a combination of attributes, masks, and properties of the dummy request objects. The method further comprises aggregating the normalized features of each dummy request object. The method further comprises processing the aggregated features of the dummy request objects, by utilizing a pre-trained model using embedding techniques, to calculate similarity scores between the dummy request objects and available component options in the component library. The method further comprises generating an output with a selection of one or more components for each of the dummy request objects based on the similarity scores thereof.

In one or more embodiments, extracting the features of the dummy request objects comprises gathering data including one or more of voltage, electric current, device type, and article numbers thereof.

In one or more embodiments, processing the features comprises tokenizing each feature to generate one or more tokens therefor.

In one or more embodiments, calculating the similarity scores involves employing a cosine similarity metric assessing a relationship between the aggregated feature of the dummy request objects and the available component options in the component library.

In one or more embodiments, the step of calculating average word vectors for each dummy request object and each available component option, Herein, each average word vector is generated from the tokens of the aggregated features, and wherein the average word vectors are used in the assessment by the cosine similarity metric.

In one or more embodiments, the pre-trained model is trained on a built vocabulary including component terms, utilizing a word embedding technique.

In one or more embodiments, generating the output comprises selecting the one or more components with respective similarity scores exceeding a predefined similarity threshold.

In one or more embodiments, generating the output comprises sorting the one or more components based on descending similarity scores thereof.

The object of the present invention is also achieved by a system comprising one or more processing units and a memory unit communicatively coupled to the one or more processing units. Herein, the memory unit comprises a component selection module stored in the form of machine-readable instructions executable by the one or more processing units, wherein the component selection module is configured to perform aforementioned method steps for selection of components in an electrical plant design.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a flowchart of a method for selection of components in an electrical plant design, in accordance with one or more embodiments of the present invention;
- FIG 2: is a block diagram representation of a system for selection of components in an electrical plant design, in accordance with one or more embodiments of the present invention;
- FIG 3A: is a depiction of an exemplary interface of a design application for selection of motor starter unit for the electrical plant design, in accordance with one or more embodiments of the present invention;
- FIG 3B: is depiction of an exemplary interface illustrating matching of components for the electrical plant design in the design application, in accordance with one or more embodiments of the present invention;
- FIG 4: is a flowchart of a process for selection of components in an electrical plant design, in accordance with one or more embodiments of the present invention;
- FIG 5A: is a depiction of an exemplary interface for extraction of masks for dummy request object corresponding to a component from a design library of the design application, in accordance with one or more embodiments of the present invention; and
- FIG 5B: is a depiction of an exemplary interface for extraction of attributes for dummy request object corresponding to a component from a design library of the design application, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for selection of components in an electrical plant design are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

The present invention provides a method that automates the identification and replacement of dummy request objects in electrical plant designs. The method includes extracting and normalizing features from these objects, aggregating these features for analysis, and utilizing a pre-trained model with embedding techniques to assess compatibility. By calculating similarity scores between dummy request objects and potential components, the method provides a more efficient and error-resistant selection process, resulting in an output of component recommendations.

It may be understood that the electrical plant design involves the conceptualization, planning, and detailing of electrical systems within an industrial facility, including the layout of components, circuitry, and infrastructure to ensure efficient, safe, and reliable operation. The electrical plant design is implemented to organize and specify electrical systems that meet the operational requirements of a facility, adhere to safety standards, and optimize performance and maintenance efficiency. The electrical plant design process is executed in a design application for the design and engineering phases to create and modify electrical schematics and layouts. The design application facilitates the generation of dummy request objects and their subsequent replacement with actual components, aiming to streamline the design process and enhance accuracy.

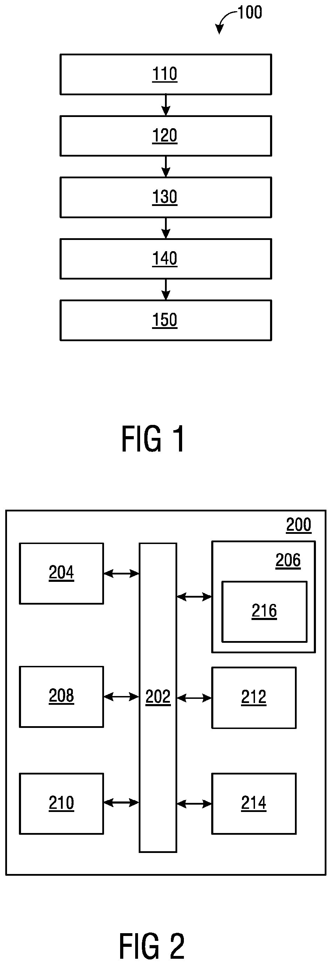

Referring now to FIG 1, illustrated is a flowchart of a method (as represented by reference numeral 100) for selection of components in an electrical plant design, in accordance with an embodiment of the present invention. The method 100 integrates a content-based recommendation engine within the design application to analyse and match dummy request objects with the most suitable manufacturing devices and elements. This approach utilizes a combination of feature extraction, data preprocessing, model application using embedding techniques, and similarity scoring to automate and optimize the selection and replacement process. The method 100 aims to significantly improve engineering efficiency, reduce the likelihood of errors, and minimize the need for subsequent rework in the electrical plant design process.

Referring to FIG 2, illustrated is a block diagram of a system 200 for selection of components in an electrical plant design, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for digitalizing and analysing the engineering diagram for the industry environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for selection of components in an electrical plant design. In particular, the memory unit 206 includes a component selection module 216 to perform steps for the said purpose.

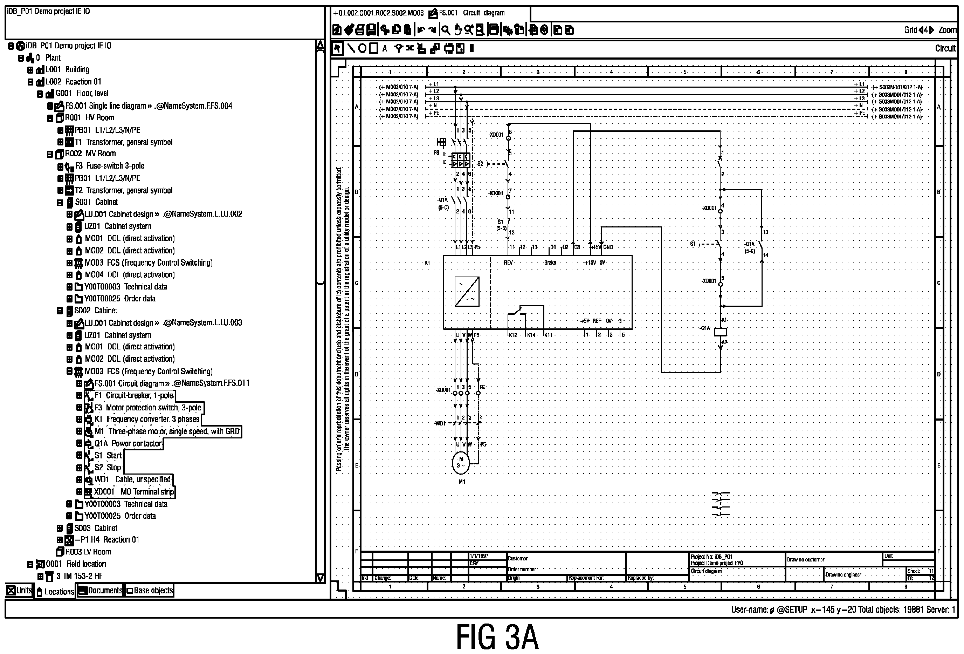

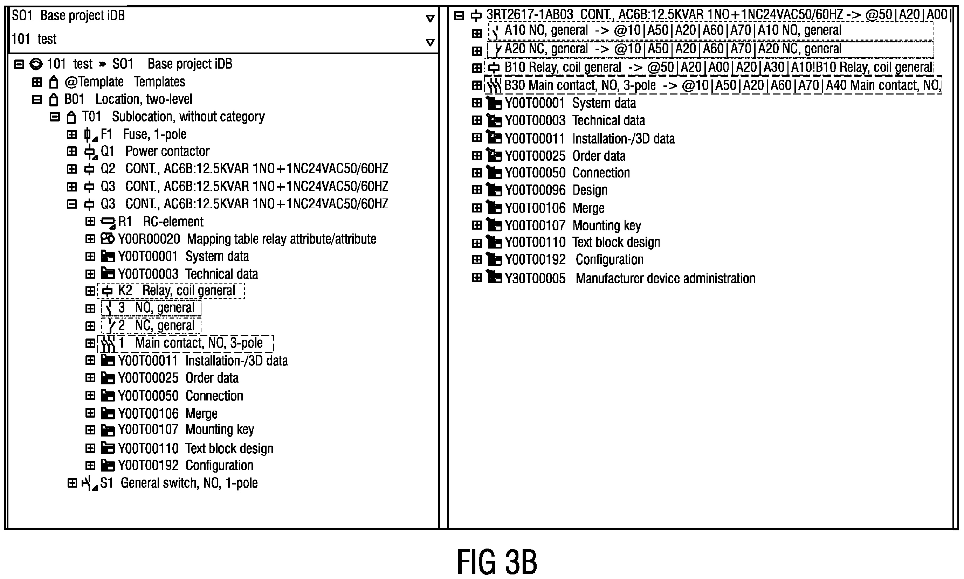

FIGS 3A and 3B depict instances of design application, illustrating stages of electrical plant design, from initial conception to detailed implementation. In FIG 3A, the basic phase of the design process is shown. Here, dummy request objects are systematically generated, including symbols and technical specifications. These dummy objects serve as placeholders within the design and are annotated with critical data relevant to various report documents, such as circuit diagrams and loop wiring diagrams, alongside technical specifications like current ratings and operating voltages. This phase establishes the framework upon which the detailed design phase is executed. In FIG 3B, the advanced functionality of the design application is highlighted. As shown, the automated matching process where elements associated with the manufacturing devices are selected. This phase of the design application allows for integrating elements of the manufacturing devices, which carry additional manufacturing information beneficial for maintenance of the device. The automatic matching is a complex task where precision is important; and any incorrect mapping, such as a Normally Open (NO) contact being erroneously matched to a Normally Closed (NC) contact, can lead to significant functionality issues, necessitating rework of the relevant documents.

The method 100 and the system 200 of the present disclosure streamlines the electrical plant design process by automating the transition from conceptual design to detailed implementation. In the basic phase of design, represented by FIG 3A, the method 100 and the system 200 systematically generate dummy request objects, which function as placeholders for actual components. These placeholders are embedded with symbols and technical specifications for integrity of the design and serve as reference points for various engineering documents. In the detailed phase of design, represented by FIG 3B, the method 100 and the system 200 mitigate the risks of manual replacement errors by automating the selection and replacement process. Thereby, the method 100 and the system 200 reduce engineering productivity loss, functionality loss, and the potential financial loss associated with human error. Moreover, the automation provides a safeguard against the complete rework of documents, a costly consequence of the traditional manual replacement process.

Referring to FIGS 1-2 in combination, various steps of the method 100 (as described hereinafter), which may be executed in the system 200, or specifically in the processing unit 204 of the system 200, for selection of components in an electrical plant design, are described. It may be appreciated that although the method 100 is illustrated and described as a sequence of steps, it may be contemplated that various embodiments of the method 100 may be performed in any order or different combinations, and need not include all of the illustrated steps.

At step 110, the method 100 includes identifying dummy request objects within the electrical plant design, wherein each dummy request object represents a placeholder for a component. In the context of electrical plant design, identifying the dummy request objects is the initial stage in the design process. Each dummy request object serves as a stand-in for a given actual component that may later be installed in the electrical plant. The dummy request objects include preliminary technical specifications for the corresponding component. These specifications often include, but are not limited to, voltage requirements, current capacities, intended functionality, and physical dimensions, which may be required for the later stages of the detailed design.

The identification of the dummy request objects within the electrical plant design is a methodical process, which involves the recognition and tagging of placeholders represented by certain symbols or indicative markers within the schematics of the design. The systematic identification of the dummy request objects allows the design application to form a bridge between the basic schematic representation and the actual components. This process of identification sets the stage for the subsequent steps in the design process, where the attributes, masks, and properties of the dummy request objects are extracted, analysed, and eventually replaced with their real-world counterparts.

At step 120, the method 100 includes extracting and normalizing features of the dummy request objects from a component library associated with the electrical plant design, wherein the features include a combination of attributes, masks, and properties of the dummy request objects. That is, upon successful identification of dummy request objects within the electrical plant design, the method 100 involves extracting and normalizing features of these objects from the component library associated with the electrical plant design in the subsequent phase. This component library is a comprehensive database containing detailed information about various electrical components and devices that could potentially replace the dummy request objects in the final design. In an example implementation, a query interface of the design application, such as COMOS, may be utilized for the feature extraction.

The features extracted include a combination of attributes, masks, and properties of the dummy request objects. Attributes may include technical specifications such as voltage requirements, current capacities, device type, article number, graphic, and physical dimensions that define the operational parameters of the components. Masks refer to the data categorizations or filters applied to these objects, including name mask like <999>, label mask like <9*>, etc., which help in segregating and organizing them according to specific design criteria. Properties, in this context, may include additional descriptive details such as the material, model numbers, and other pertinent information that characterize each dummy request object. The properties of the dummy request objects may also include metadata, which provide additional context about the dummy request objects such as the intended use or application of the component within the electrical plant, the manufacturer's details, compliance with specific industry standards, physical condition, and the like.

In an embodiment, extracting the features of the dummy request objects comprises gathering data including one or more of voltage, electric current, device type, and article numbers thereof. That is, the gathered data includes various parameters such as voltage, which specifies the electrical potential difference the component is designed to handle, and electric current, indicating the maximum current that can flow through the component under normal operating conditions. These electrical specifications are fundamental to ensuring that the selected components will operate safely and effectively within the electrical plant. Additionally, the device type is identified, providing details about the general category and functional purpose of the component, whether it be a switch, relay, transformer, or any other part of the electrical infrastructure. Further, information about the article numbers are also collected, which serve as unique identifiers for components, allowing for tracking and referencing within the component library and facilitating an accurate match during the replacement process.

It may be appreciated that, as implemented herein, normalization is a process by which these extracted features are converted into a standardized format, making them machine-readable and compatible with computational analysis methods. This may involve tokenizing the information into discrete units, harmonizing units of measurement, and structuring the data into a uniform format. By normalizing the data, the method 100 ensures that the features of the dummy request objects can be accurately interpreted and processed by the subsequent analytical steps in the design application.

At step 130, the method 100 includes aggregating the normalized features of each dummy request object. Aggregation involves the consolidation of all relevant normalized data for each dummy request object into a coherent format. The aggregation process may involve compiling and organizing the data into a format that is suitable for analysis and interpretation by the design application. In particular, the aggregation process may include combining all the feature into one content column, removing unwanted data, and creating a list of tokens as derived (discussed in preceding paragraph). This aggregation process transforms the different normalized features, including the attributes, the masks, and the properties of the dummy request objects, into a coherent dataset that can be effectively utilized in subsequent analytical procedures.

At step 140, the method 100 includes processing the aggregated features of the dummy request objects, by utilizing a pre-trained model using embedding techniques, to calculate similarity scores between the dummy request objects and available component options in the component library. This phase involves the use of the pre-trained model that incorporates advanced embedding techniques to interpret the aggregated dataset and calculate similarity scores. The pre-trained model represents a knowledge graph, having been trained on a vast array of data including various component types, features, and configurations commonly used in electrical plant designs.

In an embodiment, the pre-trained model is trained on a built vocabulary including component terms, utilizing a word embedding technique. Training of the pre-trained model is conducted on a carefully constructed vocabulary that includes a wide range of component terms. This vocabulary is drawn from the domain-specific language of electrical plant design and may include terms such as '800V' for voltage ratings, `57 A' for current capacities, `10 mm²' referring to cross-sectional areas of conductive materials, 'Feed-through Terminal Block' for specific types of connectors, as well as complex identifiers like `.N9.A870.B940.' or '@50|A20|A10|A10|A20|A40|A10|A10|A40|A10|A20|6SL3220-2YE34-0UP0!STO_A'. These terms are extracted from the processed data, ensuring that vocabulary of the model is representative of the different components it may encounter during the design process.

Utilizing this vocabulary, the pre-trained model employs the word embedding technique to transform these terms into meaningful vectors in a high-dimensional space. In present examples, the word embedding technique may be based on models such as Word2Vec or similar algorithms known for their proficiency in natural language processing and understanding. Herein, each vector captures the semantic details of the component terms, allowing the model to define patterns and relationships between different components. This capability is utilized when the model is tasked with calculating similarity scores between dummy request objects and the actual components available in the component library.

Also, as implemented herein, embedding techniques within the pre-trained model translate the multi-dimensional aggregated feature set of each dummy request object into a vector space. Each vector captures the characteristics of the dummy request object in a format that is suitable for computational analysis. By representing the features as vectors, the pre-trained model can perform comparisons that account for the relationships and similarities between the features of the dummy request objects and the actual components available in the component library.

Further, in the present embodiments, processing the features comprises tokenizing each feature to generate one or more tokens therefor. As may be understood, tokenization is employed in data preparation, especially when the data is to be analysed or processed by machine learning algorithms. Tokenization involves breaking down the information into smaller units, or tokens, that can be easily interpreted by computing systems. Herein, each feature of the dummy request objects, such as voltage, electric current, device type, and article numbers, is parsed and decomposed into tokens. These tokens represent individual attributes or characteristics of the dummy request objects. For instance, an article number 'XJ-12B' may be tokenized into 'XJ', '12', and `B', to allow for analysis of each segment independently. Thereby, the tokenization of features enables the pre-trained model to assess the data effectively using embedding techniques.

Further, in the present embodiments, calculating the similarity scores involves employing a cosine similarity metric assessing a relationship between the aggregated feature of the dummy request objects and the available component options in the component library. That is, the process of calculating the similarity scores between dummy request objects and available component options in the component library use the cosine similarity metric, which is a mathematical tool that measures the cosine of the angle between two non-zero vectors in a multi-dimensional space, which in this case are the aggregated feature vectors of the dummy request objects and the component options. The vectors represent the normalized and tokenized features of the dummy request objects, as well as the features of the available components within the library. The cosine similarity metric is particularly effective for this application as it assesses the orientation, rather than the magnitude, of the vectors, thereby determining the degree to which the dummy request objects and component options are similar in feature space.

In practice, this calculation involves comparing each vector corresponding to a dummy request object with vectors corresponding to component options. A cosine similarity score close to 1 indicates a high degree of similarity, suggesting that the component option is a strong match for the dummy request object. Conversely, a score close to 0 indicates little or no similarity. By calculating these scores, the present method 100 may rank the component options for each dummy request object, guiding the decision-making process in selecting the most appropriate components.

In some embodiments, the method 100 further includes the step of calculating average word vectors for each dummy request object and each available component option, wherein each average word vector is generated from the tokens of the aggregated features, and wherein the average word vectors are used in the assessment by the cosine similarity metric. This helps in refining the matching process between the dummy request objects and the actual components, enhancing the accuracy and reliability of the recommendations provided by the system. Herein, the average word vectors are generated from the tokens of the aggregated features of the dummy request objects and component options. This involves taking the tokenized attributes, masks, and properties, and converting them into vector representations using the word embedding techniques. The average of these vectors for each dummy request object or component option forms a singular vector. Now, by comparing the vectors of the dummy request objects with those of the available component options, the cosine similarity metric can determine the degree of alignment between the features of the dummy request objects and the actual components.

At step 150, the method 100 includes generating an output with a selection of one or more components for each of the dummy request objects based on the similarity scores thereof. This output presents a selection of the actual components for each of the dummy request objects, based directly on the calculated similarity scores. In some examples, the output also includes respective manufacturing data of the selected components. The output is generated to provide a clear, ranked selection of components for each dummy request object. Herein, the components with the highest similarity scores are prioritized, indicating a higher degree of compatibility with the features of the dummy request objects. This ranking facilitates decision-making for designers and engineers, enabling them to choose the most suitable components based on a quantifiable measure of similarity.

In an embodiment, generating the output comprises selecting the one or more components with respective similarity scores exceeding a predefined similarity threshold. That is, the selection of components in the electrical plant design is based on their respective similarity scores exceeding the predefined similarity threshold. The predefined similarity threshold is established to ensure that only components with a high degree of compatibility with the dummy request objects are considered for selection, thereby enhancing the precision of the component matching process. The similarity threshold acts as a filter, eliminating component options that, despite being somewhat similar, do not meet the set standard of compatibility, ensuring that the recommendations provided to the designers and engineers are of the highest relevance and quality.

Alternatively and/or additionally, generating the output comprises sorting the one or more components based on descending similarity scores thereof. That is, the components identified as potential replacements for the dummy request objects are sorted based on their descending similarity scores. This sorting process organizes the components from the most compatible to the least, based on the quantitative assessment of their similarity to the dummy request objects. Such a ranked list offers an intuitive overview of the component options, enabling designers and engineers to make informed decisions quickly and efficiently. The sorted list not only highlights the best matches but also provides alternative options, thereby offering flexibility in the selection process and accommodating various design considerations and constraints.

The present method 100 addresses the aforementioned challenges by implementing a content-based recommendation system within the electrical plant design application. This recommendation engine is utilized for analysing the full spectrum of properties, masks, and attributes of both the dummy request objects and the manufacturing devices or elements. The goal is to furnish the end user with an array of optimal choices, substantially enhancing the component selection process within the design framework.

The rationale for adopting a content-based recommendation system is twofold. First, it may be required to employ a recommendation system rather than a single prediction system due to the potential for multiple manufacturing devices to possess identical features. Such scenarios are not uncommon, especially when different manufacturers produce devices with similar specifications. A recommendation system, unlike a single prediction system, is adapted to offer a range of suitable options to the end user, thereby facilitating a more informed selection. Second, the recommendation systems can be broadly classified into two categories: content-based filtering techniques and collaborative filtering techniques. Collaborative filtering systems require data from numerous users and their ratings of the items in question. However, this model is not applicable to the context of the electrical plant design application, where user ratings for components are not available, and the usage of objects may vary significantly across users. In the specific case of the electrical plant design application, manufacturing devices and elements can be segmented into various clusters based on distinct characteristics. By mapping the similarities between these clusters and the vector representation of the input dummy request object, the system can effectively recommend the most compatible manufacturing devices or elements to the user. This process is enabled by the content-based filtering technique, which relies on the inherent properties and attributes of the items to generate recommendations. This technique ensures that the recommendations are based on the actual content and specifications of the devices or elements, rather than on the potentially variable preferences or behaviour of different users.

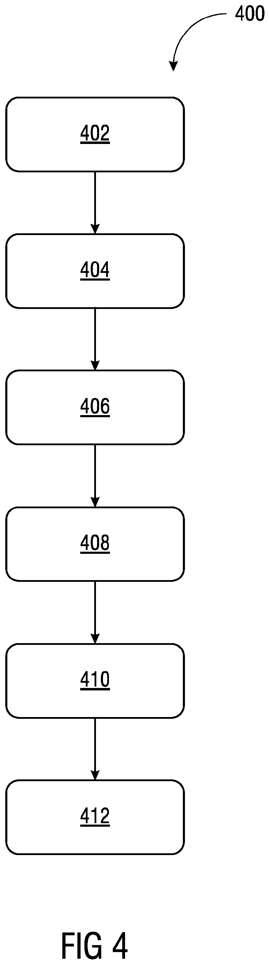

Referring to FIG 4, illustrated is a schematic of a process (as represented by reference numeral 400) for selection of components in the electrical plant design. The process 400 is based on the method 100 as discussed in the preceding paragraphs. The process 400 provides a systematic approach to use raw data for informed decision-making in the electrical plant design, ensuring that every component chosen for use in the electrical plant is the optimal fit for the intended design specifications and operational requirements.

The process 400 includes a data generation block 402 which involves the initial extraction of features for component selection. This includes gathering attributes such as voltage, electric current, and device type, along with article numbers and graphical representations. Additionally, masks and properties, which may include unique identifiers and descriptive information, are extracted. The process 400 utilizes a query interface from the electrical plant design application, such as COMOS (as known in the art), to efficiently compile this data. Herein, the query interface may be any interface element in the design application which may allow the user to provide inputs for extraction of the said details without any limitations.

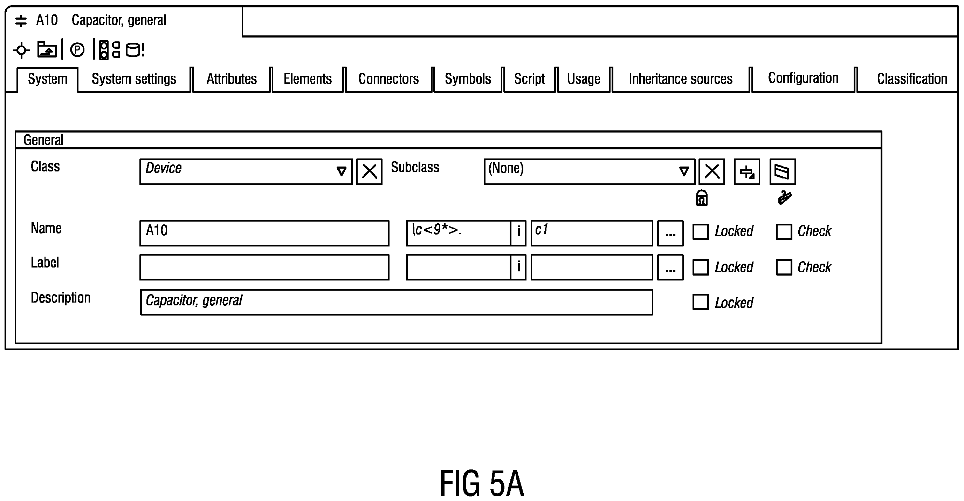

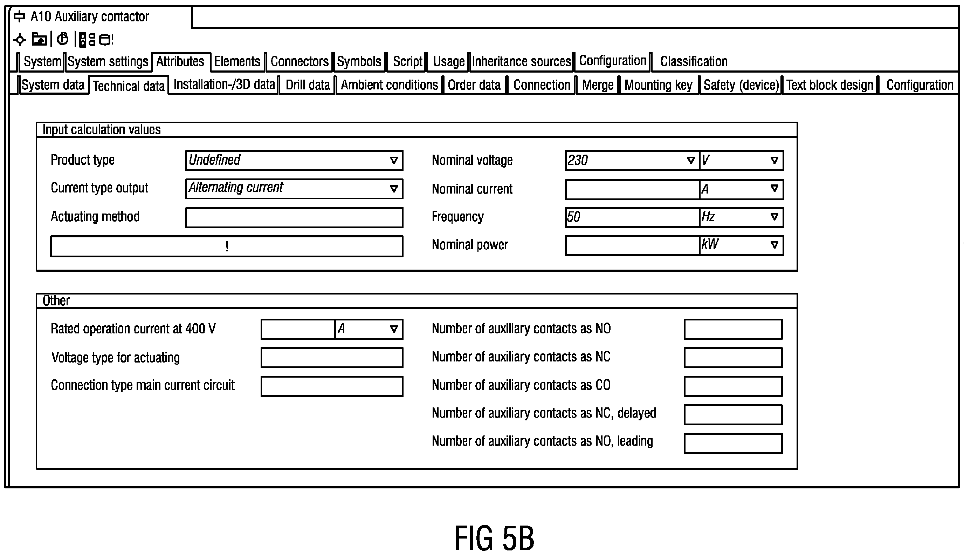

Referring to FIGS 5A and 5B, the illustrations depict the feature extraction and compilation process from the electrical plant design library. FIG 5A illustrates the interface used for extracting `Masks' from the design library. Masks are predefined templates or filters that specify certain criteria or patterns to identify and classify the features of devices within the design library. This may include unique identifiers like `F', 'R', 'T', etc., which may signify a series or category of devices, in this case, a protection device like a fuse, a resistor, a transformer, respectively; and/or label masks like `<9*>' that pattern-match a range of device labels. FIG 5B illustrates the extraction of 'Attributes', which are the specific characteristics or descriptors of the devices, such as voltage, electric current, and the type of device. These attributes provide detailed information that defines the operational parameters and physical specifications of the devices. For instance, voltage and current attributes would indicate the electrical performance criteria, while the device type would clarify the functional role within the electrical system. These figures illustrate the utilization of a query interface from the design application, which streamlines the collection of these attributes, masks, and properties into an organized dataset.

The process 400 further includes a data pre-processing block 404 which involves refining of the features extracted during data generation. This consolidates the various features into one content column, streamlining the dataset by removing any unwanted data. Furthermore, it involves creating a list of tokens from the features, a mechanism that breaks down complex information into smaller, manageable pieces that are more suitable for computational processing.

Herein, the data pre-processing may involve loading the data from Excel as:
pd.read_excel('New_targets.xlsx')

Further, the data pre-processing includes executing the following code:

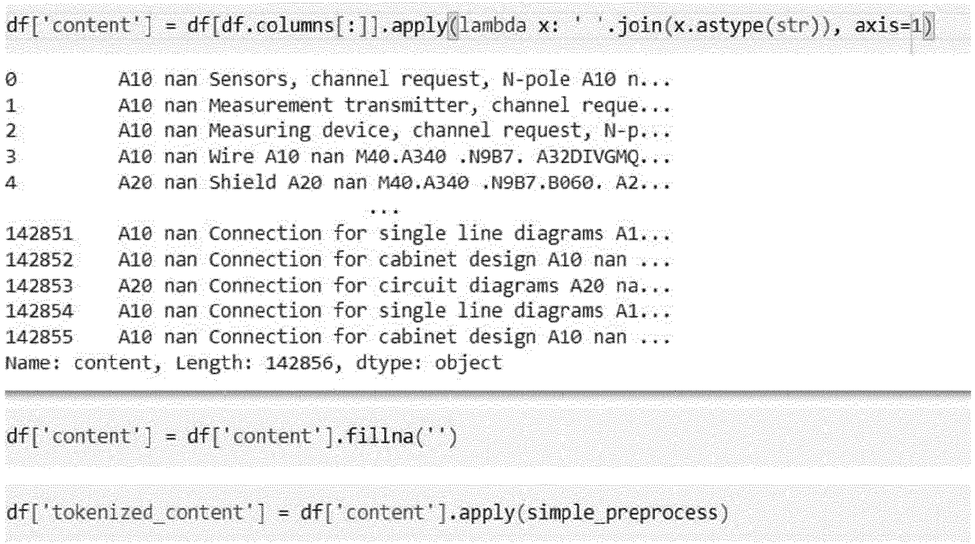

The process 400 further includes a model creation block 406 which involves initialization of a machine learning model using a word embedding technique, such as Word2Vec. This includes building a comprehensive vocabulary from the pre-processed data, including specific component terms and identifiers. The vocabulary serves as the foundation for the model's understanding of the electrical components and their features, for processing and analysing the data more effectively.

In an example, for embedding the features into vectors, algorithms like word2vec can be used as follows:

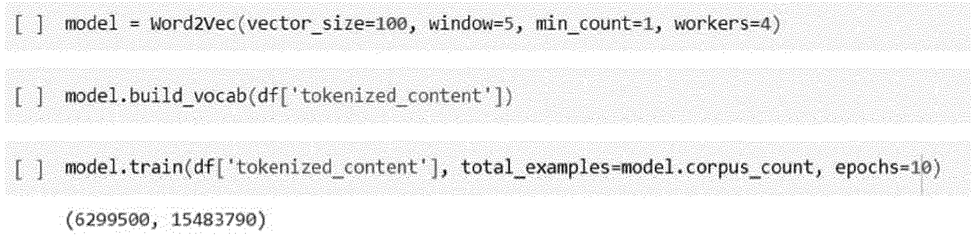

The process 400 further includes a model training block 408 which involves training the model on the vocabulary built in the previous step. This encompasses the model learning from the established vocabulary, which includes terms relevant to the electrical components and their specifications. Through training, the model develops an understanding of the context and relationships between different terms, enabling it to accurately process and evaluate the components during the selection process.

The process 400 further includes a similarity score block 410 where the pre-trained model calculates the similarity scores. This is achieved by generating average word vectors for the dummy request objects and the available components, then comparing these vectors using a cosine similarity metric. The metric assesses the relationship between the vectors, providing a score that reflects the degree of similarity between features of the dummy request objects and those of the available components.

Herein, after training the model, average word vectors for all the base objects may be calculated to use it for similarity calculations, as:
averaged_word_vectorizer(corpus=df['tokenized_content'], model=model, num_features=100)

The process 400 further includes a recommendation block 412 which takes the similarity scores and translates them into actionable output. This sorts the components based on the descending order of their similarity scores and recommends the ones that exceed the defined similarity threshold. This ensures that the components suggested for replacement of the dummy request objects are the most suitable options, facilitating an informed and data-driven selection process within the electrical plant design.

For a given dummy request object vector and the averaged feature array of device/element vectors, a similarity metrics is applied to calculate similarity scores of the given dummy request object and all other base objects, as:

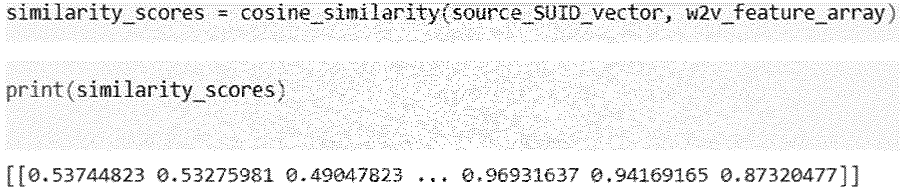

Once the recommended components are presented, the user engages to make a final selection. Upon the user's selection of a manufacturing device, the process 400 iteratively applies the established methodology to further refine the design. This involves reinitiating the sequence of steps for the elements associated with the chosen manufacturing device, as well as for the elements located hierarchically below the dummy request object in the design. The process 400 re-engages the data generation, preprocessing, model creation, model training, and similarity scoring to evaluate the lower-level elements. Each element is analysed for its compatibility based on the aggregated features and respective similarity scores, ensuring a comprehensive component selection across all layers of the electrical plant design.

The method 100 of the present disclosure provides several significant advantages over existing methods in electrical plant design. The present invention automates the process of matching and replacing dummy request objects with actual components, thereby reducing manual effort and the potential for human error. The use of the pre-trained model with embedding techniques allows for a more accurate analysis of component compatibility, leading to more precise selections. Further, the ability to dynamically adapt to changes in the component library or design requirements ensures that the recommendations remain relevant and accurate over time, enhancing overall efficiency and effectiveness of the design process.

In particular, the present method 100 provides a methodical recommendation process that significantly enhances the efficiency of selecting manufacturing devices to replace specific dummy request objects in an electrical plant design. This process methodically evaluates each dummy request object and provides a calculated recommendation from several possible manufacturing devices. Moreover, the method 100 extends its automation capabilities to the elements associated with the selected manufacturing devices. Once a manufacturing device is chosen, the same systematic workflow is applied to the associated secondary components, automating their selection in a similar manner. This recursive feature ensures consistency and efficiency throughout the various levels of the design hierarchy.

The method 100 also provides the user with options among recommended manufacturing devices and their corresponding elements. This allows users to make informed decisions, choosing from a set of pre-qualified options that meet predefined similarity thresholds, thereby streamlining the decision-making process within the electrical plant design. These advancements collectively contribute to a significant increase in engineering productivity by minimizing manual search and replacement tasks that are prone to errors. The automation and intelligent recommendation features of the invention substantially reduce the chance of human error, which has been a persistent challenge in traditional methods. Furthermore, by enhancing the accuracy of the initial selection process, the present method 100 substantially decreases the need for rework. This not only saves time and resources but also lessens the potential for functional, financial, or data losses that can occur when errors in the selection of manufacturing devices and elements are discovered at later stages.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method (100) for selection of components in an electrical plant design, the method (100) comprising:
identifying dummy request objects within the electrical plant design, wherein each dummy request object represents a placeholder for a component;
extracting and normalizing features of the dummy request objects from a component library associated with the electrical plant design, wherein the features include a combination of attributes, masks, and properties of the dummy request objects;
aggregating the normalized features of each dummy request object;
processing the aggregated features of the dummy request objects, by utilizing a pre-trained model using embedding techniques, to calculate similarity scores between the dummy request objects and available component options in the component library; and
generating an output with a selection of one or more components for each of the dummy request objects based on the similarity scores thereof.

2. The method (100) of claim 1, wherein extracting the features of the dummy request objects comprises gathering data including one or more of voltage, electric current, device type, and article numbers thereof.

3. The method (100) of claim 1, wherein processing the features comprises tokenizing each feature to generate one or more tokens therefor.

4. The method (100) of claim 3, wherein calculating the similarity scores involves employing a cosine similarity metric assessing a relationship between the aggregated feature of the dummy request objects and the available component options in the component library.

5. The method (100) of claim 4 further comprising the step of calculating average word vectors for each dummy request object and each available component option, wherein each average word vector is generated from the tokens of the aggregated features, and wherein the average word vectors are used in the assessment by the cosine similarity metric.

6. The method (100) of claim 1, wherein the pre-trained model is trained on a built vocabulary including component terms, utilizing a word embedding technique.

7. The method (100) of claim 1, wherein generating the output comprises selecting the one or more components with respective similarity scores exceeding a predefined similarity threshold.

8. The method (100) of claim 1, wherein generating the output comprises sorting the one or more components based on descending similarity scores thereof.

9. A system (200) comprising:
one or more processing units (204); and
a memory unit (206) communicatively coupled to the one or more processing units (204), wherein the memory unit (206) comprises a component selection module (216) stored in the form of machine-readable instructions executable by the one or more processing units (204), wherein the component selection module (216) is configured to perform method (100) steps for selection of components in the electrical plant design, according to any of the claims 1 to 8.

10. A computer-program product having machine-readable instructions stored therein, which when executed by one or more processing units (204), cause the one or more processing units (204) to perform a method (100) according to any of the claims 1 to 8.
